# EUROPEAN PATENT SPECIFICATION

(11) **EP 4 324 122 B1**
(45) Date of publication and mention of the grant of the patent: **05.08.2026**
(21) Application number: 21720202.7
(22) Date of filing: 15.04.2021
(51) Int. Cl.: H04W 36/00, H04W 28/02, H04W 76/11, H04W 76/12, H04W 36/14, H04W 76/22

(54) **MOBILE-NETWORK ENTITIES FOR TIME SENSITIVE COMMUNICATION ACROSS TSN DOMAINS OVER A MOBILE NETWORK**
MOBILE NETZEINHEITEN FÜR ZEITSENSITIVE KOMMUNIKATION ÜBER TSN-DOMÄNEN ÜBER EIN MOBILES NETZ
ENTITÉS DE RÉSEAU MOBILE POUR LA COMMUNICATION SENSIBLE AU TEMPS ENTRE DOMAINES TSN SUR UN RÉSEAU MOBILE

(43) Date of publication of application: 21.02.2024
(73) Proprietor: Huawei Technologies Co., Ltd., Shenzhen, Guangdong 518129 (CN)
(72) Inventor: WEI, Qing, 80992 Munich (DE); KATSALIS, Kostas, 80992 Munich (DE); CAO, Hanwen, 80992 Munich (DE)
(74) Representative: Roth, Sebastian
(86) International application number: PCT/EP2021/059769
(87) International publication number: WO 2022/218528

(56) References cited:
- WO-A1-2021/067913
- US-A1- 2020 259 896
- ERICSSON: "KI #2, New sol: UE-UE communication based on generalized Ethernet model", vol. SA WG2, no. Electronic; 20200601 - 20200612, 22 May 2020 (2020-05-22), XP051889678, Retrieved from the Internet <URL:https://ftp.3gpp.org/tsg_sa/WG2_Arch/TSGS2_139e_Electronic/Docs/S2-2003619.zip S2-2003619-UE-UE-general.docx> [retrieved on 20200522]
- "3rd Generation Partnership Project; Technical Specification Group Services and System Aspects; Study on enhanced support of Industrial Internet of Things (IIoT) in the 5G System (5GS) (Release 17)", no. V1.3.0, 29 November 2020 (2020-11-29), pages 1 - 88, XP051961718, Retrieved from the Internet <URL:https://ftp.3gpp.org/Specs/archive/23_series/23.700-20/23700-20-130.zip 23700-20-130_MCCclean.docx> [retrieved on 20201129]
- ZTE: "Termnology on the TSC MIC and Bridge ID", vol. SA WG2, no. Electronic, Elbonia; 20210412 - 20210416, 6 April 2021 (2021-04-06), XP051994159, Retrieved from the Internet <URL:https://ftp.3gpp.org/tsg_sa/WG2_Arch/TSGS2_144E_Electronic/Docs/S2-2102786.zip S2-2102786 23.502 Termnology on the TSC MIC and Bridge ID.docx> [retrieved on 20210406]
- AIJAZ ADNAN: "Private 5G: The Future of Industrial Wireless", IEEE INDUSTRIAL ELECTRONICS MAGAZINE, IEEE, US, vol. 14, no. 4, 18 December 2020 (2020-12-18), pages 136 - 145, XP011826884, ISSN: 1932-4529, [retrieved on 20201218], DOI: 10.1109/MIE.2020.3004975

## Description

### TECHNICAL FIELD

The present disclosure relates to time sensitive communication, in particular, to a Time Sensitive Network (TSN). The disclosure provides an implementation for time sensitive communication across one or more TSN domains over a mobile network, for example, a 5^{th} generation (5G) network. To this end, the disclosure provides a mobile-network entity for interacting with one or more TSN domains of the TSN, and provides a TSN-aware mobile network entity.

### BACKGROUND

TSNs are defined by a set of standards under development by the Time-Sensitive Networking task group of the IEEE 802.1 working group. The set of standards define the mechanisms for time-sensitive transmission of data over deterministic Ethernet networks.

The 3^{rd} Generation Partnership Project (3GPP) is developing the 5^{th} generation (5G) mobile network standard, which takes TSN as an important feature for supporting vertical applications such as Industrial Internet of Things (IIoT). According to the 5G standard specification (3GPP TS23.501), the 5G System (5GS), including the Radio Access Network (RAN) and the core network (CN), acts as a logical TSN Ethernet bridge, which has its switching center in a User Plane Function (UPF). The logical TSN Ethernet bridge acted by the 5GS is also called mobile network bridge in this disclosure. External Ethernet ports are located at the Device Side TSN Translators (DS-TT) on User Equipment (UE), and at Network side TSN Translators (NW-TT) on the UPF. UEs are connected to the UPF via Protocol Data Unit (PDU) sessions across the RAN and the CN.

A TSN domain defines an administrative group of devices (including bridge and end station) in a TSN network, which is managed by a common Management Entity (ME) or a Management Function (MF). A TSN domain can be considered as a black box, so that its internal details are not visible to other TSN domains. Inter-domain traffic can be established under the control of a Cross-Domain Management Entity (CDME) and an Intra-Domain Management Entity (IDME). The TSN domain concept can improve the network's manageability, the efficiency of communication, and the security.

One of the biggest advantages of a mobile network, like a 5G network, over a cabled network is the wireless mobility. Wireless mobility is essential also for highly flexible manufacturing, which is a key target of Industry 4.0. An example use case is that mobile robots, which carry objects or have different functions, move dynamically to different production cells, and attach flexibly to the TSN domains of the cells for performing temporary tasks. In this way, a fixed production line as in today's factory may not be needed anymore, which enables highly customizable and efficient manufacturing. The TSN is rooted from the Ethernet cable network.

US 2020/259896 A1 describes in detail various techniques and corresponding devices and nodes for enhancing performance in Industrial Internet-of-Things (IIoT) scenarios, including techniques for time-sensitive networking (TSN) and 5G wireless network integration. WO 2021/067913 A1 describes a configuration of time sensitive bridge during handover, i.e. a first base station receives a time sensitive networking (TSN) bridge parameter, a handover request is received from a second base station, and a handover acceptance is sent to the second base station based on the TSN bridge parameter and the handover request. ERICSSON, "KI #2, New sol: UE-UE communication based on generalized Ethernet model", 3GPP draft S2-2003619, 22 May, 2020 provides a solution that generalizes the 5GS bridge model, so that TSC communication between any two ports pairs becomes capable, i.e. the communication between any two ports becomes equally supported, including UE to UE communication.

### SUMMARY

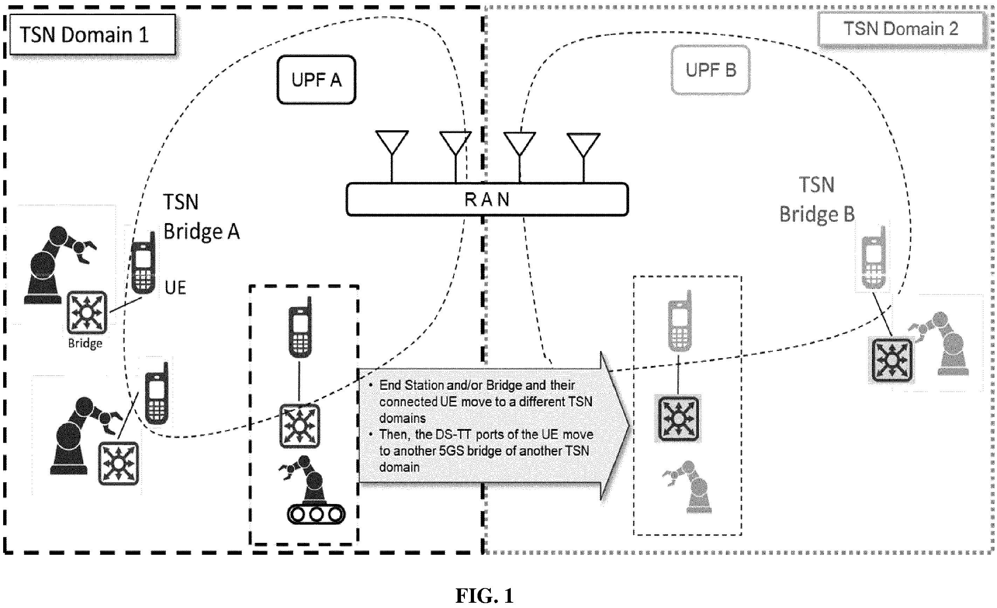

The present disclosure and its embodiments base further on the following considerations. When a TSN is enhanced by a mobile network, for example, by a 5G network (as schematically illustrated in FIG. 1), the following problems need to be solved:
- Configuring a mobile-network bridge to be part of a TSN domain and to support its domain lifecycle (e.g., to support operations like attaching, deleting, updating, merging and splitting TSN domains).
- Based on the integration with the TSN domain, supporting the mobility feature of the mobile-network in inter-TSN domain communication.

The concept of the mobility introduced by the mobile network into the TSN domain also has to be addressed with new features in the mobile network, including:
- Enhancing the CN to manage the TSN domain lifecycle and relation between mobile-network bridges and multiple TSN domains.
- Based on the above, managing by the CN the reconfiguration of the mobile network and the TSN domains adapting to the UEs' mobility.

Some current architectural agreements in 3GPP include the following:
- 5G R.16/17 target supporting a TSN.
- A 5GS is defined as a logical TSN/Ethernet bridge (Layer-2 switch)
- A 5G network can support multiple bridges. The granularity of the 5GS TSN bridge is per UPF, which act as the switching center of a bridge
- The TSN domain concept is an arising new topic in IEC/EEE 60802, which is being discussed and promoted also by other communities. The concept is not yet considered in 3GPP but it may be taken into account in the near future, since 3GPP is actively developing the support of TSN by 5G with strong the motivation of promoting its application to the Industrial Internet of Things (IIoT).

In view of the above, embodiments of this disclosure aim to provide an implementation for enhancing a TSN by a mobile network, in particular, by a 5G network. An objective is to configure a mobile-network bridge, a 5G bridge, to be part of a TSN domain, and to support the TSN domain's lifecycle. Another objective is to support the mobility feature of the mobile network in inter-TSN domain communication. Overall, there is a desire to enhance a TSN by a mobile network, in particular, by a 5G mobile network.

These and other objectives are achieved by the embodiments of this disclosure as described in the enclosed independent claims. Advantageous implementations of the embodiments of the application are further defined in the dependent claims.

A first aspect of this disclosure provides a mobile-network entity for interacting with one or more TSN domains, the mobile-network entity being configured to: receive a management request from a TSN management entity, wherein the management request indicates one or more TSN management operations and one or more TSN parameters; and send an instruction based on the management request to one or more other mobile-network entities, wherein the instruction indicates one or more mobile-network operations and one or more mobile-network parameters.

A mobile-network entity may be an entity of a mobile-network, e.g., a 3GPP network. For instance, a mobile-network entity may be a 5G network entity or a 5G+ network entity, or a 6G network entity. A mobile-network entity may be configured with/as a certain network function, for example, with/as an AF or a UPF. A mobile-network entity may also be a UE. The mobile-network entity of the first aspect may particularly be, or implement, an AF. The one or more other mobile-network entities may particularly be, or implement, a UPF or UE.

The mobile-network entity of the first aspect may act as an interface entity between the one or more TSN domains and the mobile-network (bridge). It can essentially translate TSN management requests (based on certain TSN management operations) into mobile-network operations. Thus, the mobile-network entity helps enhancing the TSN network comprising the one or more TSN domains by the mobile network. The TSN domain management may be realized based on the mobility feature of the mobile network. In particular, the mobile-network entity of the first aspect allows configuring a mobile-network bridge to be part of a TSN domain, may support the TSN domain's lifecycle. Further, the mobile-network entity of the first aspect supports the mobility feature of the mobile network in inter-TSN domain communication.

In an implementation form of the first aspect, the instruction further indicates at least one of the TSN parameters.

Thus, the one or more mobile-network operations may be performed by the one or more mobile-network entities based on the one or more mobile-network parameters and, optionally, based on the at least one TSN parameter.

In an implementation form of the first aspect, the mobile-network entity is configured to determine the one or more mobile-network operations and/or the one or more mobile-network parameters based on the one or more TSN management operations and/or the one or more TSN parameters.

That is, the mobile-network entity of the first aspect is configured to translate from an operation and/or parameter in the TSN to an operation and/or parameter in the mobile network, e.g., the 5G network.

In an implementation form of the first aspect, the mobile-network entity is further configured to identify the one or more other mobile-network entities based on the one or more mobile-network operations and/or the one or more mobile-network parameters.

In an implementation form of the first aspect, the instruction is configured to trigger the one or more other mobile-network entities to perform the one or more mobile network operations according to the one or more mobile-network parameters.

In an implementation form of the first aspect, the mobile-network entity is configured to maintain a mapping relationship between a set of TSN parameters and a set of mobile network parameters; and determine the one or more mobile-network operations and/or the one or more mobile-network parameters based on the management request and the mapping relationship.

The mapping relationship may be maintained in an association table (look-up table) or the like.

In an implementation form of the first aspect, the set of TSN parameters comprises at least one of: one or more TSN domain identifications, IDs; one or more Grand Master (GM) IDs; one or more mobile-network bridge IDs; one or more port IDs of one or more mobile-network bridges. It should be noted that the TSN Domain ID can be either a dedicated ID of a domain, or can be indicated by the ID of an unique entity in the domain, for example, the domain's management entity.

In an implementation form of the first aspect, the set of mobile-network parameters comprises at least one of: one or more UE IDs; one or more UPF IDs; one or more PDU, session IDs; one or more Data Network Access Identifier (DNAI).

In an implementation form of the first aspect, the one or more TSN operations comprise at least one of: attaching a TSN domain to a mobile-network bridge; detaching a TSN domain from a mobile-network bridge; merging of two or more TSN domains; splitting one or more TSN domains: updating the domain ID and/or GM ID of one or more TSN domains and/or mobile-network bridges; adding one or more ports to a mobile network-bridge.

Thus, the lifecycle of the one or more TSN domains can be supported and configured by the mobile-network entity of the first aspect.

In an implementation form of the first aspect, the mobile-network entity is configured to provide the one or more mobile-network parameters to the one or more other mobile-network entities to trigger them to execute the one or more mobile-network operations comprising at least one of: modifying a UPF of a PDU session; modifying a PDU session.

In an implementation form of the first aspect, the one or more TSN operations comprise removing or adding a UE, respectively, from or to a mobile-network bridge of a TSN domain.

In an implementation form of the first aspect, the one or more mobile-network operations comprise a reconfiguration to bind the UE to another mobile-network entity.

In an implementation form of the first aspect, the mobile-network entity is configured to provide the one or more mobile-network parameters to the one or more other mobile-network entities to trigger them to perform the reconfiguration, wherein the reconfiguration comprises one of: modifying a configuration of the UE; modifying a routing profile of the UE for a PDU session; modifying a DNAI of an active PDU session; configuring an Uplink (UL) Classifier (CL) in a PDU session.

In an implementation form of the first aspect, the mobile-network entity is further configured to: receive one or more confirmations from the one or more other mobile-network entities, wherein each confirmation indicates that at least one mobile-network operation according to at least one TSN management operation has been executed; and acknowledge the management request based on the received confirmation.

In an implementation form of the first aspect, the mobile-network entity is further configured to modify the mapping relationship based on the received confirmation.

In an implementation form of the first aspect, the mobile-network entity is further configured to initiate a policy control process to authorize the management request.

In an implementation form of the first aspect, the mobile-network entity implements, or is configured with, an AF.

In an implementation form of the first aspect, the one or more other mobile-network entities implement, or are configured with, at least one of a UPF and a UE.

A second aspect of this disclosure provides a TSN-aware mobile-network entity, the TSN-aware mobile-network entity being configured to: receive an instruction from another mobile-network entity, wherein the instruction indicates a mobile-network operation, a mobile-network parameter, and a TSN parameter; and perform the mobile-network operation according to the mobile-network parameter and the TSN parameter.

The TSN-aware mobile-network entity of the second aspect helps to enhance the TSN network comprising the one or more TSN domains by the mobile network. In particular, the mobile-network entity of the second aspect supports configuring a mobile-network bridge to be part of a TSN domain. Further, the TSN-aware mobile-network entity of the second aspect supports the mobility feature of the mobile network in inter-TSN domain communication.

In an implementation form of the second aspect, the TSN-aware mobile network entity implements, or is configured with, at least one of a UPF and a UE.

In an implementation form of the second aspect, the TSN-aware mobile network entity is further configured to operate according to at least one policy of a TSN domain.

A third aspect of this disclosure provides a method for interacting with one or more Time TSN domains, the method comprising: receiving a management request from a TSN management entity, wherein the management request indicates one or more TSN management operations and one or more TSN parameters; and sending an instruction based on the management request to one or more other mobile network entities, wherein the instruction indicates one or more mobile network operations and one or more mobile network parameters.

In an implementation form of the third aspect, the instruction further indicates at least one of the TSN parameters.

In an implementation form of the third aspect, the method comprises determining the one or more mobile-network operations and/or the one or more mobile-network parameters based on the one or more TSN management operations and/or the one or more TSN parameters.

In an implementation form of the third aspect, the method further comprises identifying the one or more other mobile-network entities based on the one or more mobile-network operations and/or the one or more mobile-network parameters.

In an implementation form of the third aspect, the instruction is configured to trigger the one or more other mobile-network entities to perform the one or more mobile network operations according to the one or more mobile-network parameters.

In an implementation form of the third aspect, the method comprises: maintaining a mapping relationship between a set of TSN parameters and a set of mobile network parameters; and determining the one or more mobile-network operations and/or the one or more mobile-network parameters based on the management request and the mapping relationship.

In an implementation form of the third aspect, the set of TSN parameters comprises at least one of: one or more TSN domain identifications, IDs; one or more Grand Master (GM) IDs; one or more mobile-network bridge IDs; one or more port IDs of one or more mobile-network bridges.

In an implementation form of the third aspect, the set of mobile-network parameters comprises at least one of: one or more UE IDs; one or more UPF IDs; one or more PDU, session IDs; one or more Data Network Access Identifier (DNAI).

In an implementation form of the third aspect, the one or more TSN operations comprise at least one of: attaching a TSN domain to a mobile-network bridge; detaching a TSN domain from a mobile-network bridge; merging of two or more TSN domains; splitting one or more TSN domains: updating the domain ID and/or GM ID of one or more TSN domains and/or mobile-network bridges; adding one or more ports to a mobile network-bridge.

In an implementation form of the third aspect, the method comprises providing the one or more mobile-network parameters to the one or more other mobile-network entities to trigger them to execute the one or more mobile-network operations comprising at least one of: modifying a UPF of a PDU session; modifying a PDU session.

In an implementation form of the third aspect, the one or more TSN operations comprise removing or adding a UE, respectively, from or to a mobile-network bridge of a TSN domain.

In an implementation form of the third aspect, the one or more mobile-network operations comprise a reconfiguration to bind the UE to another mobile-network entity.

In an implementation form of the third aspect, the method comprises providing the one or more mobile-network parameters to the one or more other mobile-network entities to trigger them to perform the reconfiguration, wherein the reconfiguration comprises one of: modifying a configuration of the UE; modifying a routing profile of the UE for a PDU session; modifying a DNAI of an active PDU session; configuring an Uplink (UL) Classifier (CL) in a PDU session.

In an implementation form of the third aspect, method comprises: receiving one or more confirmations from the one or more other mobile-network entities, wherein each confirmation indicates that at least one mobile-network operation according to at least one TSN management operation has been executed; and acknowledging the management request based on the received confirmation.

In an implementation form of the third aspect, the method further comprises modifying the mapping relationship based on the received confirmation.

In an implementation form of the third aspect, the method further comprises initiating a policy control process to authorize the management request.

In an implementation form of the third aspect, the mobile-network entity implements, or is configured with, an AF.

In an implementation form of the third aspect, the one or more other mobile-network entities implement, or are configured with, at least one of a UPF and a UE.

The method of the third aspect and its implementation forms provide the same advantages as the mobile-network entity of the first aspect and its respective implementation forms.

A fourth aspect of this disclosure provides a method for a TSN-aware network entity, the method comprising: receiving an instruction from another network entity, wherein the instruction indicates a mobile network operation, a mobile network parameter, and a TSN parameter; and performing the mobile network operation according to the mobile network parameter and the TSN parameter.

In an implementation form of the fourth aspect, the TSN-aware mobile network entity implements, or is configured with, at least one of a UPF and a UE.

In an implementation form of the fourth aspect, the TSN-aware mobile network entity further operates according to at least one policy of a TSN domain.

The method of the fourth aspect and its implementation forms provide the same advantages as the TSN-aware mobile-network entity of the second aspect and its respective implementation forms.

A fifth aspect not encompassed by the subject-matter of the claims but considered useful for understanding the invention of this disclosure provides a computer program comprising a program code which causes, when being executed by a processor, the processor to perform the method according to the third aspect or the fourth aspect or any implementation form thereof.

A sixth aspect not encompassed by the subject-matter of the claims but considered useful for understanding the invention of the present disclosure provides a non-transitory storage medium storing executable program code which, when executed by a processor, causes the method according to the third aspect or fourth aspect or any of their implementation forms to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows an exemplary architecture of a TSN enhanced by a mobile network.
- FIG. 2: shows mobile-network entities according to embodiments of this disclosure.
- FIG. 3: shows an exemplary architecture of a TSN enhanced by a 5G mobile network, and illustrating TSN and 5G network entities according to embodiments of this disclosure.
- FIG. 4: illustrates a mapping relationship of TSN domain and mobile-network bridges, as maintained by a mobile-network entity according to an embodiment of this disclosure.
- FIG. 5: shows an exemplary procedure to configure a 5G network bridge as a part of a TSN domain.
- FIG. 6: shows an exemplary procedure for mobility across different TSN domains. In particular, based on a TSN request for removing a DS-TT port (UE) from/to a certain TSN domain.
- FIG. 7: shows an exemplary procedure for mobility across different TSN domains. In particular, based on a dynamic reconfiguration of a binding relation of a UE/DS-TT with a UPF via UE configuration update.
- FIG. 8: shows an exemplary procedure for mobility across different TSN domains. In particular, based on a dynamic reconfiguration of a binding relation of a UE/DS-TT with a UPF via AF influence on traffic routing.
- FIG. 9: shows an exemplary procedure for mobility across different TSN domains. In particular, based on a dynamic reconfiguration of a binding relation of a UE/DS-TT with a UPF via an UL CL PDU session.
- FIG. 10: shows a method for a mobile-network entity according to an embodiment of the invention
- FIG. 11: shows a method for a TSN-aware mobile-network entity according to an embodiment of the invention

### DETAILED DESCRIPTION OF EMBODIMENTS

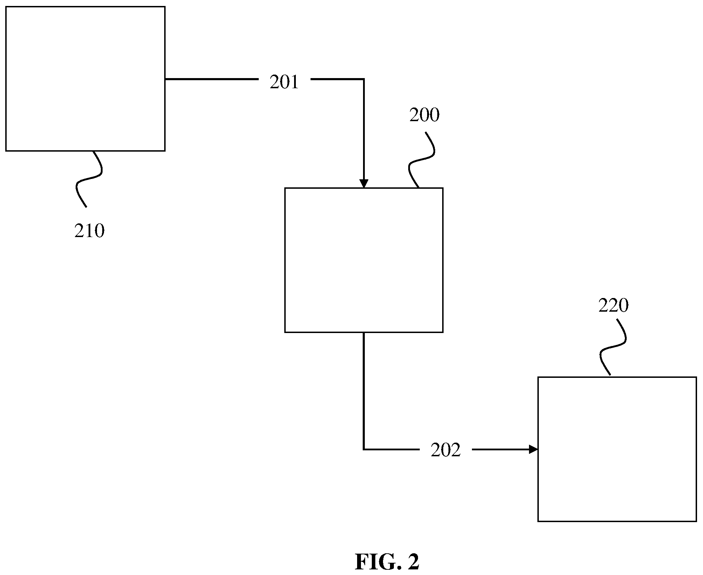

FIG. 2 shows a mobile-network entity 200 according to an embodiment of this disclosure, a TSN-aware mobile-network entity 220 according to an embodiment of this disclosure, and a TSN management entity 210. The mobile-network entity 200 and the TSN-aware mobile-network entity 220, respectively, may be located in a mobile network, for instance, in a 5G or 5G+ network. The mobile-network entity 200 is configured to interact with one or more TSN domains of the TSN. The mobile network entity 200 may be a 5G network entity, in particular, it may be at an AF of a 5G network. The TSN-aware mobile-network entity 220 may be at a UPF of the 5G network. The TSN-aware mobile-network entity 220 may also be a UE in the 5G network. The TSN management entity 210 may be an IDME or CDME.

The mobile-network entity 200 and/or the TSN-aware mobile-network entity 220 may comprise a processor or processing circuitry (not shown) configured to perform, conduct or initiate the various operations of the respective mobile-network entity 200, 220 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The mobile network entity 200 and/or the TSN-aware mobile-network entity 220 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the respective mobile network entity 200, 220 to be performed. In one embodiment, the processing circuitry comprises one or more processors and a non-transitory memory connected to the one or more processors. The non-transitory memory may carry executable program code which, when executed by the one or more processors, causes the respective mobile network entity 200, 220 to perform, conduct or initiate the operations or methods described herein.

The mobile-network entity 200 is configured to receive a management request 201 from the TSN management entity 210, wherein the management request 201 indicates one or more TSN management operations and one or more TSN parameters. A TSN operation comprises at least one of: attaching a mobile-network bridge to a TSN domain; detaching 9 a mobile-network bridge from a TSN domain; merging of two or more TSN domains; splitting one or more TSN domains; updating the domain ID and/or GM ID of one or more TSN domains and/or mobile-network bridges; and adding one or more Ethernet ports to a mobile-network bridge. The set of TSN parameters comprises at least one of: one or more TSN domain IDs; one or more GM IDs; one or more mobile-network bridge IDs; and one or more port IDs of one or more mobile-network bridges.

Further, the mobile-network entity 200 is configured to send an instruction 202 based on the management request 201 to the TSN-aware mobile-network entity 220 (generally, to one or more other mobile network entities 2220). The instruction 202 may be sent in response to the management request 201, and is based on the one or more TSN management operations and/or the one or more TSN parameters. The instruction 202 indicates at least one or more mobile-network operations and one or more mobile-network parameters. It indicates one or more TSN parameters. The one or more mobile-network operations comprise at least one of: modifying a UPF of a PDU session; and modifying a PDU session. The one or more mobile-network parameters comprises at least one of: one or more UE IDs; one or more UPF IDs; one or more PDU session IDs; and one or more DNAI.

Each of the one or more other mobile-network devices 220 is a TSN-aware mobile-network entity 220 according an embodiment of this disclosure. The TSN-aware mobile network entity 220 is configured to receive the instruction 202 from the mobile-network entity 200, wherein the instruction 202 indicates the mobile-network operation, the mobile-network parameter, and indicates a TSN parameter. The TSN-aware mobile network entity 220 is further configured to perform the mobile-network operation according to the mobile-network parameter and the TSN parameter. Each of the one or more TSN-aware mobile-network entities 202 is configured to operate according to at least one policy of a TSN domain.

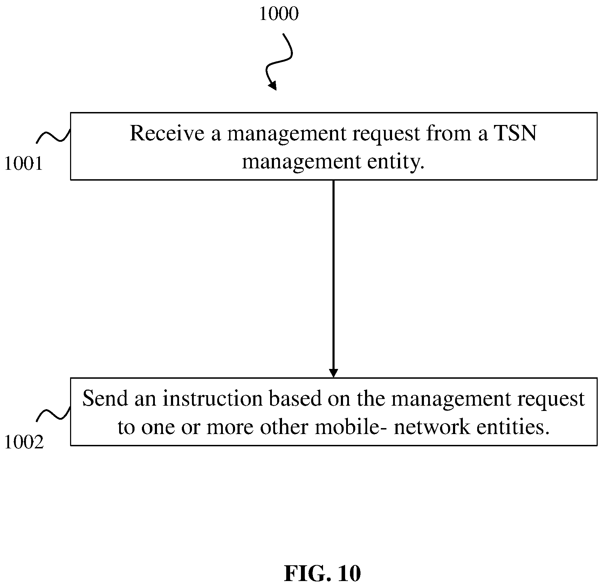

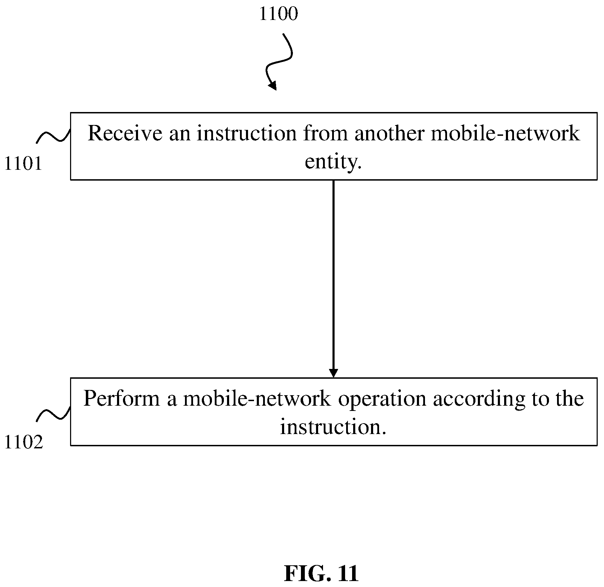

According to the above, embodiments of this disclosure propose different mobile-network entities 200, 210, 220 (and corresponding methods, see FIG. 10 and FIG. 11) to manage one or more TSN domains in a TSN enhanced by a mobile network, in particular, by a 5G network.

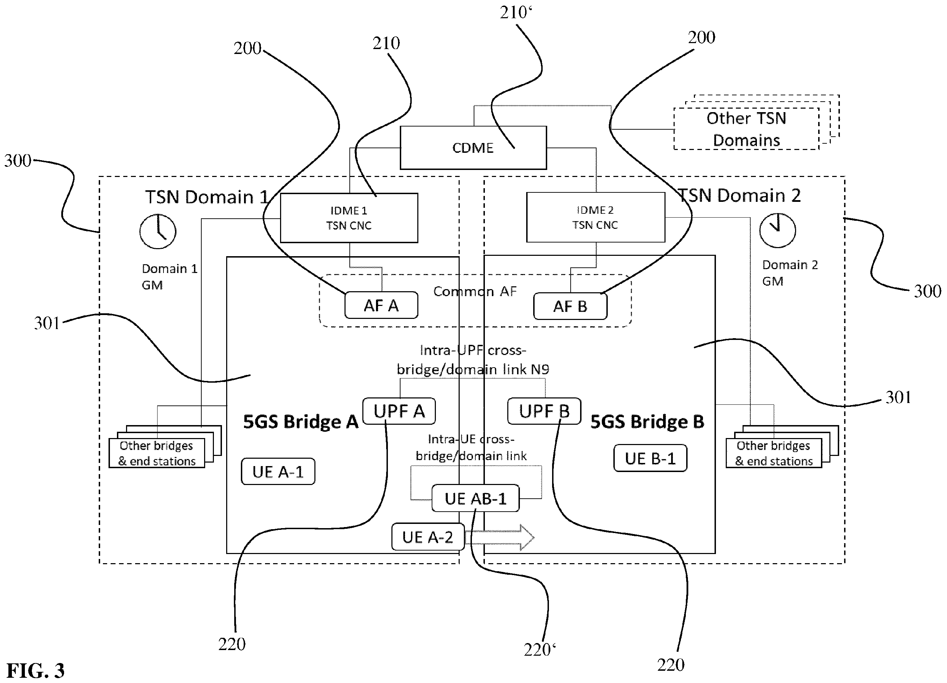

FIG. 3 shows an exemplary architecture of such a TSN including one of more TSN domains 300, wherein the TSN is enhanced by a 5G network, in particular, by one or more 5G network bridges 301. In particular, a 5GS including the RAN and the CN may act as a logical TSN Ethernet bridge (mobile network bridge), which has its switching center in a UPF and has external data-plane ports at the NW-TT of the UPF and the DS-TT at UE(s). A control-plane interface may be handled by an AF. The data-plane ports and the control-plane interface of the bridge may be connected to the external TSN network, which can involve multiple TSN domains.

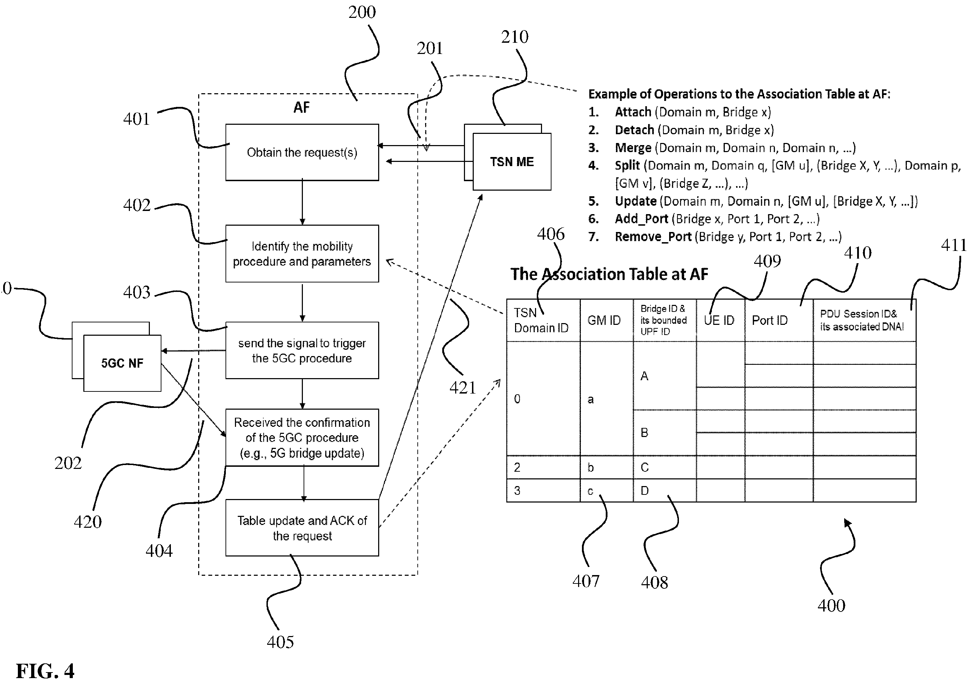

The new functionality of the mobile-network entity 200, which is proposed by this disclosure, is in this embodiment located at the AF 200 of the 5G network (notably, FIG. 3 shows an AF-A for a first 5G network bridge A, and an AF-A for a second 5G network bridge B). The AF 200 may maintain a mapping relationship 400 (see also FIG. 4) mapping between one or more TSN network entities (e.g., TSN bridges 301 and/or ports) and the one or more TSN-aware (5G) mobile network entities 220 (e.g., realized as UPF, SMF, or UE in the 5G network) regarding TSN domain related information. Upon receiving the TSN domain related management request 201 from the TSN management entity 210 (e.g., from the IDME), the AF 200 may identify the related TSN-aware 5G network entities 220, and may trigger one or more related 5G procedures (i.e., the one or more mobile-network operations) to execute the management decision indicated by the TSM management request 201 (i.e., the one or more TSN operations).

The IDME 210 manages the communication between mobile-network bridges 301 and end stations within the same TSN domain 300. A Central Network Controller (CNC), which is defined in the TSN standard, and a more capable Industrial Automation Management Entity (IA-ME) can play the role of the IDME 210. The TSN management entity 210 may also be a CDME 210', which manages the communication between different TSN domains 301. The IDME 210 and CDME 210' are external entities outside of the mobile network. The IDME 210 may provide the management request 201 to the mobile network entity 200 via a controller (e.g., CNC) using method of bridge configuration.

FIG. 4 shows a mapping relationship 400, which is maintained by the mobile-network entity 200, particularly, by the AF 200. The mapping relationship 400 may relate TSN domains 300 and mobile-network bridges 301. In particular, the mapping relationship 400 includes a mapping between a set of TSN parameters and a set of mobile-network parameters. The mapping relationship 400 shown in FIG. 4 is exemplarily realized as an association table or look-up table.

The table 400 at the AF 200 may include TSN specific information elements (e.g., one or more TSN parameters such as domain ID(s) 406, GM ID(s) 407, and/or mobile network bridge ID(s) 408). Further, the table 400 may include mobile-network (5G) specific information elements (e.g., one or more mobile-network parameters such as UE ID 409, and/or PDU session ID 411). The UE ID 409 and PDU session ID 411 may identify the responsible SMF and UPF 220 in the (5G) mobile network.

The mapping relationship 400 between these different kinds of information elements can be 1 to M. For instance, one UE can have multiple PDU sessions, wherein each PDU session belongs to a different domain. One UE ID 409 may thus be associated with multiple PDU session IDs 411 in the mapping relationship 400. A TSN domain 300 may include multiple mobile-network bridges 301, which may use the same GM. That is, a TSN domain ID 406 may be associated with multiple mobile-network bridge IDs 408 in the mapping relationship 400, and with the same GM ID 407. However, two TSN domains 300 could also use different GMs, i.e., different GM IDs 407 would be associated.

FIG. 4 shows also a procedure for the TSN management entity (ME) 210, which may be used to configure or change TSN domain information related to one or more 5G NFs. In particular, the procedure may include the following steps as shown.

Step 401: The TSN ME 210 sends the management request 201 to the AF 200, wherein the management request 201 indicates the one or more TSN management operations and the one or more TSN parameters. The one or more TSN management operations comprises the following, as also indicated in FIG. 4 (Note that "[ ]" denotes an optional parameter).
- Attach (Domain m, Bridge x), i.e., attach a TSN domain m to a mobile network bridge x.
- Detach (Domain m, Bridge x), i.e., detach a TSN domain m from a mobile network bridge x.
- Merge (Domain m, Domain n, Domain p, ...), i.e., merge two or more TSN domains n, m and p.
- Split (Domain m, Domain q, [GM u], (Bridge X, Y, ...), Domain p, [GM v], (Bridge Z, ...), ...), i.e., split one or more TSN domains m, q, p.
- Update (Domain m, Domain n, [GM u], [Bridge X, Y, ...]), i.e., update the domain ID and/or GM ID of one or more TSM domains m, n, and/or one or more mobile network bridges X, Y,...
- Add_Port (Bridge x, Port 1, Port 2, ...), i.e., add one or more ports 1, 2, ..., to a mobile network bridge y.
- Remove_Port (Bridge y, Port 1, Port 2, ...), i.e., remove one or more ports 1, 2, ..., from a mobile network bridge y.

Step 402: The AF 200 identifies, based on the received management request 201, a mobility procedure, i.e., the one or more-mobile network operations based on the one or more related mobile-network parameters, using the mapping relationship 400 that is maintained at the AF 200. That is, the AF 200 is configured to determine the one or more mobile-network operations and the one or more mobile-network parameters based on the one or more TSN management operations and the one or more TSN parameters.

Step 403: The AF 200 sends the instruction 202 to the one or more TSN-aware mobile-network entities 220 of the 5G network (here 5G NFs, like UPF) and thus trigger the internal mobility procedure, i.e., the performing of the one or more mobile-network operations according to the one or more mobile-network parameters and, optionally, one or more TSN parameters, at the one or more TSN-aware mobile-network entities 220.

Step 404: Each of the 5G NFs 220 confirms 420 the successful execution of the TSN domain management in the involved 5G NFs 220, e.g., sends a confirmation 420 that at least one mobile-network operation according to at least one TSN management operation has been executed (e.g.. via Policy Control Function (PCF) event report to AF 200).

Step 405: The AF 200 updates the (mapping relationship) table 400 accordingly and acknowledges (e.g., sends an acknowledgement 421) to the management request 201 to the TSN management entity 210.

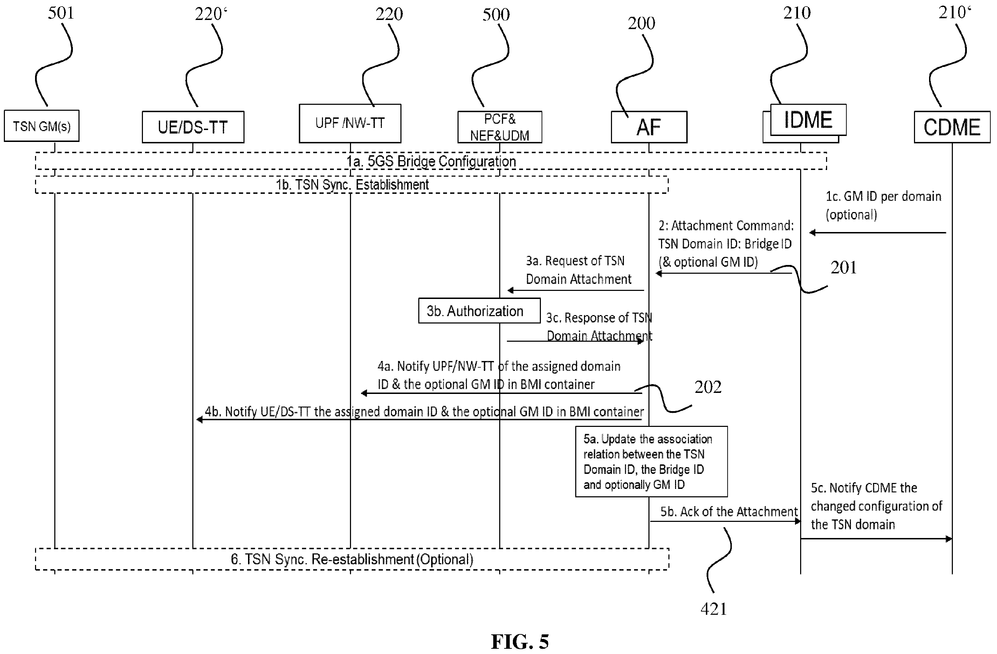

FIG. 5 shows an exemplary procedure to configure a 5G network bridge 301 as a part of a TSN domain 300. In particular, it shows a procedure to configure a 5G network bridge 301 to attach to a TSN domain 300:
Steps 1a-c: At the beginning, the 5G network bridge 301 may have already been configured (step 1a, 5GS bridge configuration) by an IDME 210 (e.g., a CNC), and the mobile-network bridge 301 may have been synchronized to a GM clock (step 1b, TSN synchronization establishment). Besides, the IDME 210 (as a TSM management entity 210) may have been configured by the CDME 210' (another TSM management entity 210) to manage a TSN domain 300 with an optional GM identity (ID) for that TSN domain 300 assigned by the CDME 210' (step 1c, GM ID per domain).

Step 2: The IDME 201 (as the TSM management entity 210) sends the attachment command (TSM operation) in the TSM management request 201 to the 5G network's AF 200 (as the mobile-network entity 200). The request 201 includes the 5G network bridge ID 408, the TSN Domain ID 406, and optionally a GM ID 407 of the TSN domain 300 (see also FIG. 4). The GM ID 407 can be denoted by one or the combination of these information elements: {grandmasterIdentity, source MAC address, sourcePortIdentity and domainNumber}. The bridge ID 408 of the 5G network bridge 301, port number(s) of the Ethernet port(s) in NW-TT could be preconfigured on the UPF 220.

Steps 3a-3c: The AF 200 may initiate some policy control process with the PCF 500, a Network Exposure function (NEF) and Unified Data Management (UDM), in order to authorize the attachment to the TSN domain 300. Notably, the AF 200 may interact with multiple IDMEs 210 (e.g.. via CNC). The policy control process may include sending a TSN domain attachment process to the PCF, NEF and UDM (step 3a), performing an authorization by the PCF, NED, and UDM (step 3b), and sending a response of the TSN domain attachment from the PCF, NEF, and UDM to the AF (step 3c).

Steps 4a-b: The AF 200 notifies, per instruction 202, the NW-TT at the UPF 220 (step 4a; as the TSN-aware mobile-network entity 220), and the DS-TT at a UE 220' (step 4b; as another TSN-aware mobile network entity 220) of the TSN Domain ID 406 and the optional GM ID 407. The instruction 2002 may comprise a Bridge Management Information (BMI) container including at least one TSN parameter.

Steps 5a-b: The AF 200 updates (step 5a) its stored mapping relationship 400 (see also FIG. 4) of the attachment operation and acknowledges 421 to the IDME 210 about the successful attachment (step 5b). The IDME 210 should further notify the CDME 210' of the possible change of the domain's 300 configuration due to the newly attached 5G network bridge 301.

Step 6: If during the TSN domain attachment, a new GM for the 5G network bridge 301 has been specified by the IDME 210, the bridge 301 may re-establish its synchronization to the new GM.

According to the above, the AF 200 handles the relation of the 5G network bridges 301 to and from a TSN domain 300, namely by TSM management operation such as attachment, detachment, update, merge, split update, etc. The AF 200 stores the association relation 400 between the TSN Domain ID 406, the Bridge ID 408, and the optionally GM ID 407.

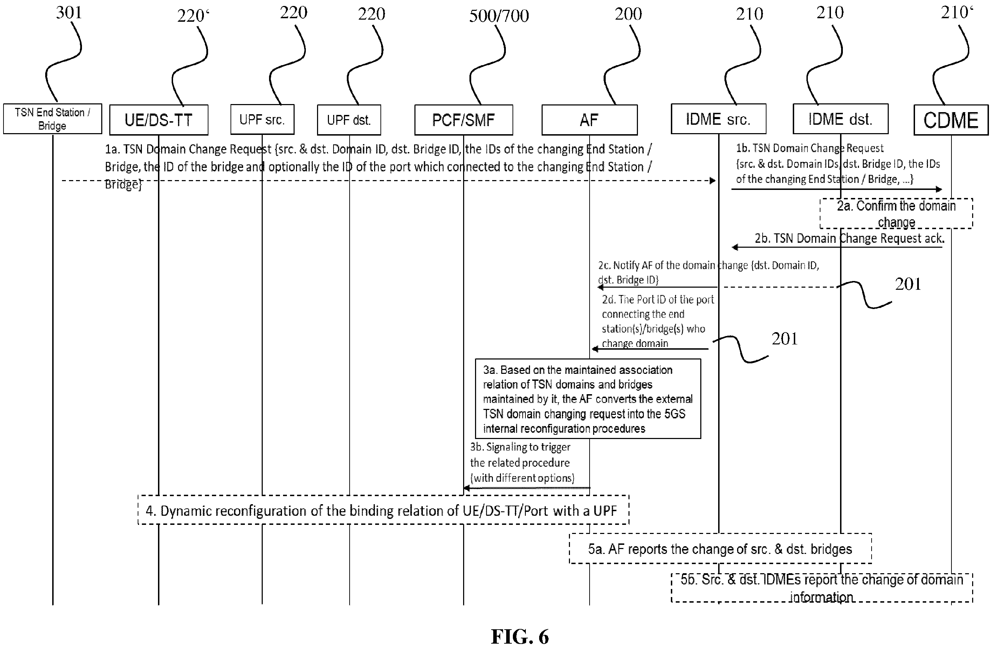

FIG. 6 shows an exemplary procedure for mobility across different TSN domains 300. In particular, the procedure is based on a TSN management request 201 for removing a DS-TT port (UE 220') from/to a certain TSN domain 300. The following steps may be performed:
Steps 1a-b: The change of the TSN domain 300 is requested by a source (src) IDME 210 to the CDME 210' (step 1b). In the request, the destination domain ID 406, the destination network bridge ID 408, the ID(s) of the moving end station / bridge 301, and the ID of the network bridge 301 and optionally the ID 410 of the port, which connected to the changing end station / bridge 301 (the ID(s) of the 5G network bridge and the port on UE/DS-TT) may be provided. There are two options.
- Option A: Driven by the application colocated with a TSN end station or a bridge 301, the change of the TSN domain 300 may be requested by a TSN end station or bridge 301 (step 1a), which is connected to the DS-TT at a UE 220'. The request may be forwarded by the source IDME 210 of the current TSN domain 300 to the CDME 210'.
- Option B: Driven by the application colocated with the source IDME 210, the change of the TSN domain 300 may be requested by the source IDME 210 of the current TSN domain 300 to the CDME 210'.

Steps 2a-d: The CDME 210' confirms (step 2a) with the IDME 210 of the destination domain 300 and acknowledges (step 2b) the domain change request to the IDME 210 of the source domain 300. Either the source IDME 210 or the destination (dest) IDME 210 notify (step 2c) the AF 200, via the TSN management request 201, of the TSN domain change with the necessary information including the destination domain ID 406 and the destination bridge ID 408. Besides, the source IDME 210 provides (step 2d) the ID 410 of the port on UE/DS-TT 220' connecting to the end station / bridge 301, which changes the TSN domain 300. This port ID 410 is either provided by the changing end station / bridge 301 to the source IDME 210 in Step 1, or it is derived from the source IDME's 210 topology information of the source TSN domain 300.

Steps 3a-b: Based on the maintained association relation 400 of the TSN domains 300 and mobile-network bridges 301 maintained by the AF 200, the AF 200 converts (step 3a) the external TSN domain changing request (TSN operations and/or parameters) into the 5GS internal reconfiguration procedures (mobile-network operations and/or parameters), e.g., identify the UE/DS-TT 220' connected to the end station(s) / bridge(s) 301, which changes the TSN domain 300; and identify the UPF 220 related to the destination domain 300 and bridge 301 according to the stored mapping table 400 in the AF 200). The AF 200 then triggers (step 3b) the internal reconfiguration procedure to the PCF 500 and Service Management Function (SMF) 700.

Step 4: The 5G network internal reconfiguration of the binding relation of UE/DS-TT 220' with a UPF 210, which has two options as described below.

Steps 5a-b: The AF 200 reports (step 5a) the updated information of the source bridge 301 and destination bridge 301 to the source IDME 210 and destination IDME 210, respectively. Then, the source and destination IDMEs 210 report (step 5b) to CDME 210' of the configuration changes in their respective TSN domains 300.

According to the above, the AF 200 handles the TSN domain changing information (convert that into 5G operations and related 5G parameters, e.g., identify the UE/DS-TT/Port and PDU session of changing (add, remove)). The AF 200 triggers the related 5G mobile-network operations of reconfiguring the binding relation of UE/DS-TT/Port with a UPF 220 and a PDU session.

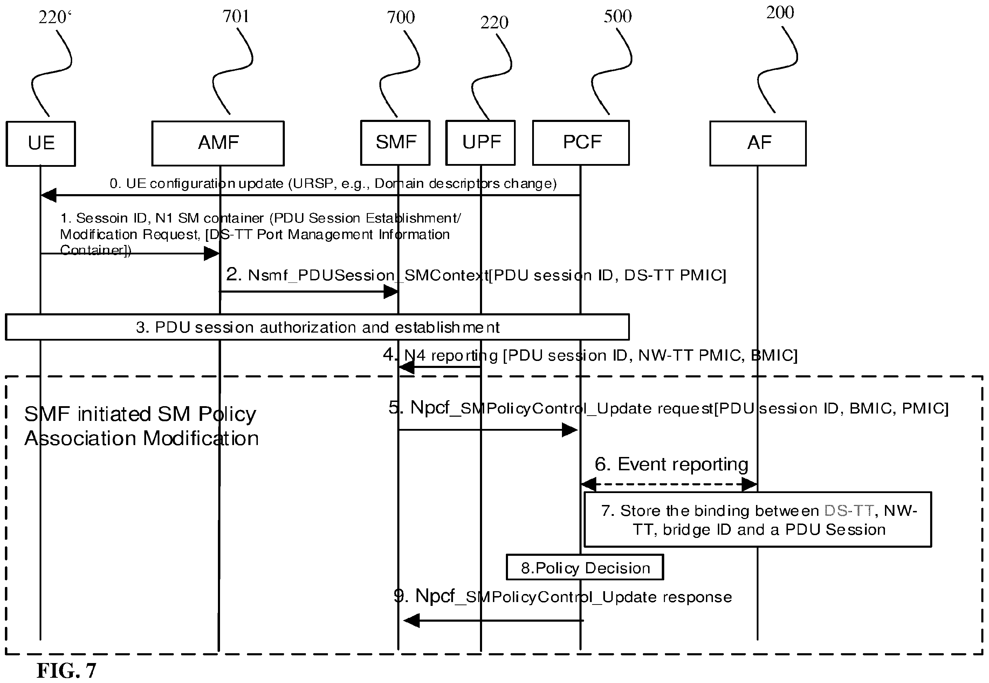

FIG. 7 shows an exemplary procedure for mobility across different TSN domains 300. In particular, a procedure based on a dynamic reconfiguration of a binding relation of a UE/DS-TT with a UPF 220 via UE configuration update.

Based on AF information (e.g. change the UE routing profile), the PCF 500 may trigger (step 0) the reconfiguration of UE/DS-TT domain by updating the UE configuration (e.g., URSP*). The UE 220' releases the PDU session, which does not match the URSP anymore, and may establish a new PDU session using the following steps:
Step 1, 2: The UE 220' reports to SMF 700 via Access and Mobility Management Function (AMF) on the added/removed (DS-TT) and PDU session ID using PDU session establishment/modification request.

Step 3: PDU session authorization and establishment (e.g., as in TS23.502 clause 4.3.2.2).

Step 4: The UPF 220 reports on the NW-TT information and BMI to SMF 700 (including bridge 301 and/or domain 300) for this PDU session.

Step 5, 6: The SMF 700 updates the correspondent TSN AF* (e.g., DS-TT PMIC, BMIC, NW-TT PMIC per PDU session per TSN domain 300) via the PCF 500.

Step 7: The AF 200 identifies the ID of the linked bridge 301 and updates the maintained bridge information.

Afterwards, the AF 200 updates the correspondent CNC (e.g., added/removed/updated DS-TT per TSN domain 300, linked bridge 301). Notably, the AF 200 could be a TSN AF per TSN domain 300 or used for multiple TSN domains 300.

The association between the MAC address used by the PDU Session, 5G network bridge ID 408 and port number on DS-TT is maintained at the AF 200, and further used to assist to bind the TSN traffic with the UE's PDU session (e.g., as in TS23.501 clause 5.28.2).

When the UE 220' release the PDU session, the SMF 700 informs the PCF 500, and the PCF 500 indicates to the AF 200 to remove the entry of that PDU session in the table 400.

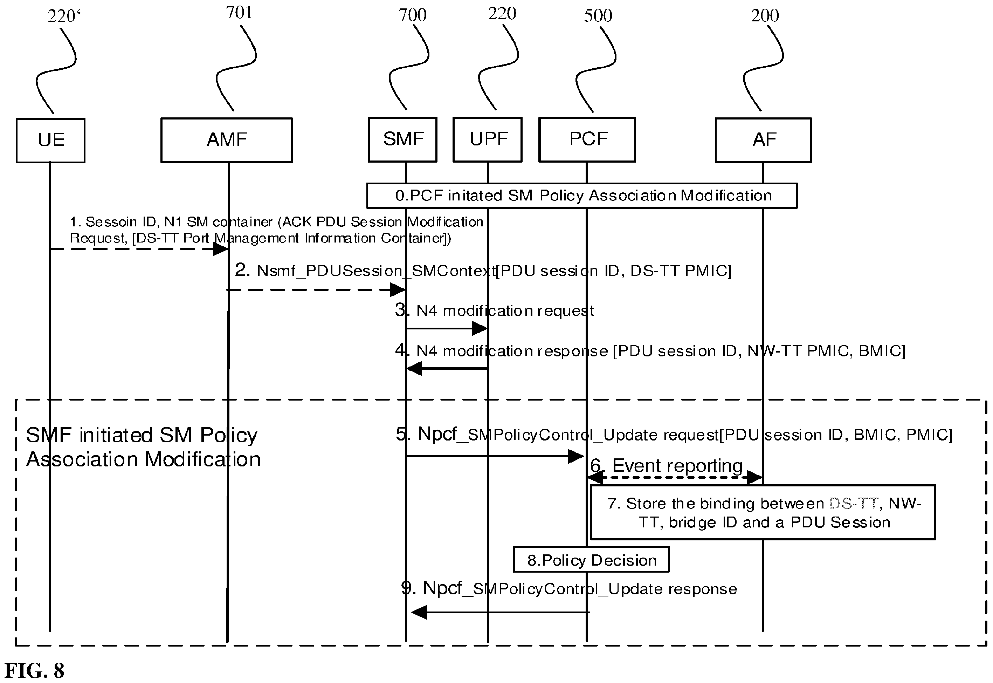

FIG. 8 shows an exemplary procedure for mobility across different TSN domains 300. In particular, the procedure is based on a dynamic reconfiguration of a binding relation of a UE/DS-TT with a UPF 220 via AF influence on traffic routing.

The PCF 500 may update the SMF policy according to the request from the AF 200 (e.g., to change the DNAI and corresponding routing profile for a certain PDU session of a certain UE 220' and consequently the UPF ID). Such policy is provided to the responsible SMF 700. And the SMF 700 triggers the procedure to modify the current PDU session using, for example, the following steps:
Steps 1, 2: The SMF 700 keeps the session ID 411 and DS-TT PMIC information reported from UE 220' during the previous PDU session establishment/modification procedure.

Step 3: The SMF 700 requests the modification of PDU session to another UPF 220.

Step 4: The UPF 220 reports on the NW-TT information and BMI to the SMF 700 (including bridge domain) for this PDU session.

Steps 5, 6: The SMF 700 updates the correspondent AF 200 (e.g., DS-TT PMIC, BMIC, NW-TT PMIC per PDU session per TSN domain) via PCF 500. In particular, the SMF 700 sends an update request to the PCF 500 (step 5), and the PCF 500 updates the AF 200 via event reporting (step 6).

Step 7: The AF 200 identifies the ID of the linked bridge 301 and update the maintained bridge information.

Afterwards, the AF 200 updates the correspondent CNC (e.g., added/removed/updated DS-TT per TSN domain 300, linked bridge 301).

Notably, since the session ID 411 does not change, the AF 200 updates entry of that PDU session in the table 400 in this case.

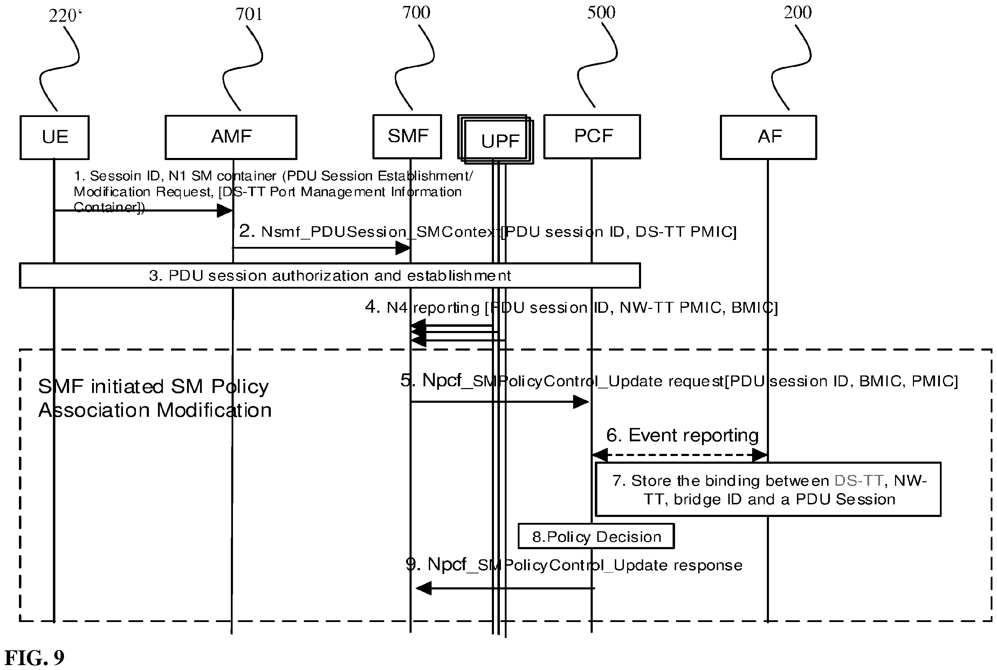

FIG. 9 shows an exemplary procedure for mobility across different TSN domains 300. In particular, the procedure is based on a dynamic reconfiguration of a binding relation of a UE/DS-TT with a UPF via an UL CL PDU session (a PDU session with Uplink classifier). The SMF 700 may use single PDU session with multiple anchors technology to establish a PDU session to multiple UPFs 220.

In this case, step 3 and step 4 will be different from the procedure in FIG. 7 and 8.
- In step 3, the SMF 700 decides to use in the data path of a PDU Session a UPF supporting the UL CL functionality during the PDU session establishment (e.g., step 3 in FIG. 7) or after the PDU Session Establishment (e.g., Step 3 in FIG 8 during the PDU session modification).
- In step 4 each UPF 220 should report to the SMF 700 as follows. Step 4: Each UPF 220 reports on the NW-TT information and BMI to the SMF 700 (including bridge domain) for this PDU session.

In case of one shared AF 200 by multiple domains 300, the AF 200 maintains multiple bridge DS-TT binding for the same PDU session. In case of an AF 200 per TSN domain 300, each domain AF 200 keeps an independent entry per PDU session for the bridge 301 to DS-TT binding.

FIG. 10 shows a method 1000 according to an embodiment of the invention. The method 1000 is for a mobile-network entity 200 according to an embodiment of this disclosure. The method 1000 is for interacting, by the mobile-network entity 200, with one or more TSN domains 300 of a TSN. The method 1000 comprises a step 1001 of receiving a management request 201 from a TSN management entity 210. The management request 201 indicates one or more TSN management operations and one or more TSN parameters. The method 1000 further comprises a step 1002 of sending an instruction 202 based on the management request 201 to one or more other mobile-network entities 220. The instruction 202 indicates one or more mobile-network operations and one or more mobile-network parameters.

FIG. 11 shows a method 1100 according to an embodiment of the invention. The method 1100 is for a TSN-aware mobile-network entity 220 according to an embodiment of this disclosure. The method 1100 comprises a step 1101 of receiving an instruction 202 from another mobile-network entity 200. The instruction 202 indicates a mobile-network operation, a mobile-network parameter, and a TSN parameter. The method 1100 further comprises a step 1102 of performing the mobile-network operation according to the mobile-network parameter and the TSN parameter. In summary, new functions proposed by this disclosure include the following.
- A new set of methods/entities/interfaces inside the mobile-network (CN), particularly a 5G core, to enable TSN network lifecycle control on per TSN domain 300 basis.
- A new set of methods/device/interfaces enabling attachment (also removal etc.) of the 5G network (bridges 301) to multiple TSN domains 300.
- Methods that enable wiring/mapping of a multi-domain TSN underlay network to TSN flows.
- A new identification mechanism to enable a single 5G network to be abstracted as multiple logical mobile-network bridges 301 and be part of multiple TSN domains 300 concurrently (thus sometimes also referred to as TSN bridges 301).
- New procedures inside TSN-aware mobile-network entities 220 components (like the AF 200 and UPF 220) that must now be aware of the new identification mechanism.
   ▪ Bridge domain information (e.g., domain ID, GM ID) management (mapping table) at the related NFs (e.g., AF, NW-TT).
   ▪ Procedure and signaling for bridge 301 to domain 300 attachment.
   ▪ Request, acknowledgement, provision.
   ▪ Bridge domain information distribution in 5G CN.
   ▪ Per TSN domain port identification for UEs 220'.
- New functions that enable mobility of end-station / port / UE when moving across different TSN domains 300 (crossing the domain boundaries).
   ▪ Enhanced Port/bridge, PDU session binding at the AF (M:1) (mapping table)
   ▪ Conversion between port change request of TSN bridge and 5GC procedure and related 5GC parameters (e.g., UE ID, PDU session ID) .
   ▪ Aggregation of multiple co-related port change request of TSN bridge (e.g., moving from one domain to the other)
   ▪ Triggering of the 5GC procedure based on the port change request

New features in mobile-network entities 200, 220 according to embodiments of the application, particularly with respect to the 5G network, are summarized in the following:
- In the AF 200 (mobile-network entity 200):
   ▪ Incorporate a new service to maintain and update the mapping relationship ship 400 between the TSN domains 300 and 5G network bridges 301.
   ▪ Incorporate a new interpreter that is TSN domain 300 aware and is able to handle attach, delete, merge, and split domain requests.
   ▪ Incorporate new data structures and TSN domain 300 aware data-types.
   ▪ Identify the related UPF and PDU session according to the stored mapping table 400.
   ▪ Identify the UE 220', which changes its UPF 220 connection according to the change of domain 300.
- In the NW-TT / UPF 220 (TSN-aware mobile-network entity 220):
   ▪ Incorporate new data structures and TSN domain aware data-types in order raise awareness of the associated TSN domain 300.
   ▪ When at the edge of a TSN domain 300, act according to the policy of the TSN domain 300.
- DS-TT / UE 220' (another TSN-aware mobile-network entity 220):
   ▪ Incorporate a new service and data-types for the associated TSN domain 300.
   ▪ When at the edge of a TSN domain 300, act according to the policy of the TSN domain 300.
   ▪ When the change of TSN domain 300 is triggered, establish the PDU session to the new UPF 220 according to AF's 200 instruction.
- TSN IDME 210 (TSN management entity 210)
   ▪ Trigger the domain change of an end station or bridge 600 under its management in its TSN domain 300.

Advantages provided by the embodiments of this disclosure include the following:
- TSN domain 300 concept is demanded and under intensive discussion and development. Based on the initial support of TSN from 5G and consensus in TSN domain concept, this disclosure tries to further enhance the 5G network to be manageable for multiple TSN domains 300.
- This disclosure further propose the new design of supporting dynamic TSN domain management in 5GC based on the 5G's nature of mobility, which is particularly helpful for mobile robot applications which is important to the flexible manufacturing target of I4.0.
- Based on the inventors' observation of the activities in IEC/IEEE 60802, 5G-ACIA and 3GPP, the proposed features in this disclosure are well aligned with the rising new requirements in IIoT, which could good potential in standardization.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A mobile-network entity (200) for interacting with one or more Time Sensitive Network, TSN, domains (300), wherein the mobile network entity (200) implements, or is configured with, an Application Function, AF, and wherein the mobile-network entity (200) is further configured to:
receive a management request (201) from a TSN management entity (210), wherein the management request (201) indicates one or more TSN management operations and one or more TSN parameters; and
send an instruction (202) based on the management request (201) to one or more other mobile-network entities (220), wherein the one or more other mobile-network entities (220) implement, or are configured with, at least one of a User Plane Function, UPF and a User Equipment, UE (220'), and wherein the instruction (202) indicates one or more mobile-network operations and one or more mobile-network parameters.

2. The mobile-network entity (200) according claim 1, wherein the instruction (202) further indicates at least one of the TSN parameters.

3. The mobile-network entity (200) according to claim 1 or 2, configured to determine the one or more mobile-network operations and/or the one or more mobile-network parameters based on the one or more TSN management operations and/or the one or more TSN parameters.

4. The mobile-network entity (200) according to one of the claims 1 to 3, further configured to identify the one or more other mobile-network entities (220) based on the one or more mobile-network operations and/or the one or more mobile-network parameters.

5. The mobile-network entity (200) according to one of the claims 1 to 4, wherein the instruction (202) is configured to trigger the one or more other mobile-network entities (220) to perform the one or more mobile-network operations according to the one or more mobile-network parameters.

6. The mobile-network entity (200) according to one of the claims 1 to 5, configured to:
maintain a mapping relationship (400) between a set of TSN parameters and a set of mobile-network parameters; and
determine the one or more mobile-network operations and/or the one or more mobile-network parameters based on the management request (201) and the mapping relationship (400).

7. The mobile-network entity (200) according to claim 6, wherein the set of TSN parameters comprises at least one of:
- one or more TSN domain identifications, IDs (406);
- one or more Grand Master, GM, IDs (407);
- one or more mobile network bridge IDs (408);
- one or more port IDs (410) of one or more mobile-network bridges (301).

8. The mobile-network entity (200) according to claim 6 or 7, wherein the set of mobile-network parameters comprises at least one of:
- one or more User Equipment, UE, IDs (409);
- one or more User Plane Function, UPF, IDs (408);
- one or more Protocol Data Unit, PDU, session IDs (411);
- one or more Data Network Access Identifier, DNAI (411).

9. The mobile-network entity (200) according to one of the claims 1 to 8, wherein the one or more TSN management operations comprise at least one of:
- attaching a TSN domain (300) to a mobile-network bridge (301);
- detaching a TSN domain (300) from a mobile-network bridge (301);
- merging of two or more TSN domains (300);
- splitting one or more TSN domains (300);
- updating the domain ID (406) and/or GM ID (407) of one or more TSN domains (300) and/or mobile-network bridges (301);
- adding one or more ports to a mobile-network bridge (301).

10. The mobile-network entity (200) according to one of the claims 1 to 9, configured to provide the one or more mobile-network parameters to the one or more other mobile-network entities (220) to trigger them to execute the one or more mobile-network operations comprising at least one of:
- modifying a UPF of a PDU session;
- modifying a PDU session.

11. The mobile-network entity (200) according to one of the claims 1 to 10, further configured to:
receive one or more confirmations (420) from the one or more other mobile-network entities (220), wherein each confirmation (420) indicates that at least one mobile-network operation according to at least one TSN management operation has been executed; and
acknowledge (421) the management request (201) based on the received confirmation (420).

12. A TSN-aware mobile-network entity (220), wherein the TSN-aware mobile-network entity (220) is configured to implement, or is configured with, at least one of a User Plane Function, UPF, and a User Equipment, UE (220'), and wherein the TSN-aware mobile-network entity (220) is further configured to:
receive an instruction (202) from another mobile-network entity (200), wherein the instruction (202) indicates a mobile-network operation, a mobile-network parameter, and a TSN parameter, and wherein the another mobile network entity (200) is configured to implement, or is configured with, an Application Function, AF; and
perform the mobile-network operation according to the mobile-network parameter and the TSN parameter.

13. The TSN-aware mobile-network entity (220) according to claim 12, further configured to operate according to at least one policy of a TSN domain (300).

14. A method (1000) for a mobile-network entity (200) for interacting with one or more Time Sensitive Network, TSN, domains (300), wherein the mobile network entity (200) implements, or is configured with, an Application Function, AF, and wherein the method (1000) comprises:
receiving (1001) a management request (201) from a TSN management entity (210), wherein the management request (201) indicates one or more TSN management operations and one or more TSN parameters; and
sending (1002) an instruction (202) based on the management request (201) to one or more other mobile-network entities (220), wherein the one or more other mobile-network entities (220) implement, or are configured with, at least one of a User Plane Function, UPF and a User Equipment, UE (220'), and wherein the instruction (202) indicates one or more mobile-network operations and one or more mobile-network parameters.

15. A method (1100) for a TSN-aware mobile-network entity (220), wherein the TSN-aware mobile-network entity (220) is configured to implement, or is configured with, at least one of a User Plane Function, UPF, and a User Equipment, UE (220'), and wherein the method (1100) comprises:
receiving (1101) an instruction (202) from another mobile-network entity (200), wherein the instruction (202) indicates a mobile-network operation, a mobile-network parameter, and a TSN parameter, and wherein the another mobile network entity (200) is configured to implement, or is configured with, an Application Function, AF; and
performing (1102) the mobile-network operation according to the mobile-network parameter and the TSN parameter.

## Patentansprüche

1. Mobilfunknetzeinheit (200) zum Interagieren mit einer oder mehreren zeitkritischen Netzdomänen, TSN-Domänen (300), wobei die Mobilfunknetzeinheit (200) eine Anwendungsfunktion, AF, implementiert oder damit konfiguriert ist und die Mobilfunknetzeinheit (200) ferner konfiguriert ist zum:
Empfangen einer Managementanforderung (201) von einer TSN-Managementeinheit (210), wobei die Managementanforderung (201) eine oder mehrere TSN-Managementoperationen und einen oder mehrere TSN-Parameter angibt; und
Senden eines Befehls (202) auf der Grundlage der Managementanforderung (201) zu einer oder mehreren weiteren Mobilfunknetzeinheiten (220), wobei die eine oder die mehreren weiteren Mobilfunknetzeinheiten (220) mindestens eines einer Benutzerebenenfunktion, UPF, und einer Benutzereinrichtung, UE, (220'), implementieren oder damit konfiguriert sind und der Befehl (202) eine oder mehrere Mobilfunknetzoperationen und einen oder mehrere Mobilfunknetzparameter angibt.

2. Mobilfunknetzeinheit (200) nach Anspruch 1, wobei der Befehl (202) ferner mindestens einen der TSN-Parameter angibt.

3. Mobilfunknetzeinheit (200) nach Anspruch 1 oder 2, die konfiguriert ist, die eine oder die mehreren Mobilfunknetzoperationen und/oder den einen oder die mehreren Mobilfunknetzparameter auf der Grundlage der einen oder der mehreren TSN-Managementoperationen und/oder des einen oder der mehreren TSN-Parameter zu bestimmen.

4. Mobilfunknetzeinheit (200) nach einem der Ansprüche 1 bis 3, die ferner konfiguriert ist, die eine oder die mehreren weiteren Mobilfunknetzeinheiten (220) auf der Grundlage der einen oder der mehreren Mobilfunknetzoperationen und/oder des einen oder der mehreren Mobilfunknetzparameter zu identifizieren.

5. Mobilfunknetzeinheit (200) nach einem der Ansprüche 1 bis 4, wobei der Befehl (202) konfiguriert ist, auszulösen, dass die eine oder die mehreren weiteren Mobilfunknetzeinheiten (220) die eine oder die mehreren Mobilfunknetzoperationen gemäß dem einen oder den mehreren Mobilfunknetzparametern durchführen.

6. Mobilfunknetzeinheit (200) nach einem der Ansprüche 1 bis 5, die konfiguriert ist zum:
Aufrechterhalten einer Abbildungsbeziehung (400) zwischen einem Satz von TSN-Parametern und einem Satz von Mobilfunknetzparametern und
Bestimmen der einen oder der mehreren Mobilfunknetzoperationen und/oder des einen oder der mehreren Mobilfunknetzparameter auf der Grundlage der Managementanforderung (201) und der Abbildungsbeziehung (400).

7. Mobilfunknetzeinheit (200) nach Anspruch 6, wobei der Satz von TSN-Parametern mindestens eines der Folgenden umfasst:
- eine oder mehrere TSN-Domänenkennungen, TSN-Domänen-IDs, (406);
- eine oder mehrere Großmeister-IDs, GM-IDs, (407);
- eine oder mehrere Mobilfunknetzbrücken-IDs, (408);
- eine oder mehrere Anschluss-IDs (410) einer oder mehrerer Mobilfunknetzbrücken (301).

8. Mobilfunknetzeinheit (200) nach Anspruch 6 oder 7, wobei der Satz von Mobilfunknetzparametern mindestens eines der Folgenden umfasst:
- eine oder mehrere Benutzereinrichtungs-IDs, UE-IDs, (409);
- eine oder mehrere Benutzerebenenfunktions-IDs, UPF-IDs, (408);
- eine oder mehrere Protokolldateneinheitssitzungs-IDs, PDU-Sitzungs-IDs, (411);
- eine oder mehrere Datennetzzugriffskennungen, DNAI, (411).

9. Mobilfunknetzeinheit (200) nach einem der Ansprüche 1 bis 8, wobei die eine oder die mehreren TSN-Managementoperationen mindestens eines der Folgenden umfassen:
- Anfügen einer TSN-Domäne (300) an eine Mobilfunknetzbrücke (301);
- Lösen einer TSN-Domäne (300) von einer Mobilfunknetzbrücke (301);
- Zusammenführen von zwei oder mehr TSN-Domänen (300);
- Teilen einer oder mehrerer TSN-Domänen (300);
- Aktualisieren der Domänen-ID (406) und/oder der GM-ID (407) einer oder mehrerer TSN-Domänen (300) und/oder Mobilfunknetzbrücken (301);
- Hinzufügen eines oder mehrerer Anschlüsse zu einer Mobilfunknetzbrücke (301).

10. Mobilfunknetzeinheit (200) nach einem der Ansprüche 1 bis 9, die konfiguriert ist, den einen oder die mehreren Mobilfunknetzparameter für die eine oder die mehreren weiteren Mobilfunknetzeinheiten (220) bereitzustellen, um auszulösen, dass sie die eine oder die mehreren Mobilfunknetzoperationen ausführen, die mindestens eines der Folgenden umfassen:
- Ändern einer UPF einer PDU-Sitzung;
- Ändern einer PDU-Sitzung.

11. Mobilfunknetzeinheit (200) nach einem der Ansprüche 1 bis 10, die ferner konfiguriert ist zum:
Empfangen einer oder mehrerer Bestätigungen (420) von der einen oder den mehreren weiteren Mobilfunknetzeinheiten (220), wobei jede Bestätigung (420) angibt, dass mindestens eine Mobilfunknetzoperation gemäß mindestens einer TSN-Managementoperation ausgeführt worden ist; und
Bestätigen (421) der Managementanforderung (201) auf der Grundlage der empfangenen Bestätigung (420).

12. TSN-bewusste Mobilfunknetzeinheit (220), wobei die TSN-bewusste Mobilfunknetzeinheit (220) konfiguriert ist, mindestens eines einer Benutzerebenenfunktion, UPF, und einer Benutzereinrichtung, UE, (220') zu implementieren oder damit konfiguriert ist und die TSN-bewusste Mobilfunknetzeinheit (220) ferner konfiguriert ist zum:
Empfangen eines Befehls (202) von einer weiteren Mobilfunknetzeinheit (200), wobei der Befehl (202) eine Mobilfunknetzoperation, einen Mobilfunknetzparameter und
einen TSN-Parameter angibt und die weitere Mobilfunknetzeinheit (200) konfiguriert ist, eine Anwendungsfunktion, AF, zu implementieren oder damit konfiguriert ist; und Durchführen der Mobilfunknetzoperation gemäß dem Mobilfunknetzparameter und dem TSN-Parameter.

13. TSN-bewusste Mobilfunknetzeinheit (220) nach Anspruch 12, die ferner konfiguriert ist, gemäß mindestens einer Strategie einer TSN-Domäne (300) zu arbeiten.

14. Verfahren (1000) für eine Mobilfunknetzeinheit (200) zum Interagieren mit einer oder mehreren zeitkritischen Netzdomänen, TSN-Domänen (300), wobei die Mobilfunknetzeinheit (200) eine Anwendungsfunktion, AF, implementiert oder damit konfiguriert ist und das Verfahren (1000) Folgendes umfasst:
Empfangen (1001) einer Managementanforderung (201) von einer TSN-Managementeinheit (210), wobei die Managementanforderung (201) eine oder mehrere TSN-Managementoperationen und einen oder mehrere TSN-Parameter angibt; und
Senden (1002) eines Befehls (202) auf der Grundlage der Managementanforderung (201) zu einer oder mehreren weiteren Mobilfunknetzeinheiten (220), wobei die eine oder die mehreren weiteren Mobilfunknetzeinheiten (220) mindestens eines einer Benutzerebenenfunktion, UPF, und einer Benutzereinrichtung, UE, (220') implementieren oder damit konfiguriert sind und der Befehl (202) eine oder mehrere Mobilfunknetzoperationen und einen oder mehrere Mobilfunknetzparameter angibt.

15. Verfahren (1100) für eine TSN-bewusste Mobilfunknetzeinheit (220), wobei die TSN-bewusste Mobilfunknetzeinheit (220) konfiguriert ist, mindestens eines einer Benutzerebenenfunktion, UPF, und einer Benutzereinrichtung, UE, (220'), zu implementieren oder damit konfiguriert ist und das Verfahren (1100) Folgendes umfasst:
Empfangen (1101) eines Befehls (202) von einer weiteren Mobilfunknetzeinheit (200), wobei der Befehl (202) eine Mobilfunknetzoperation, einen Mobilfunknetzparameter und einen TSN-Parameter angibt und die weitere Mobilfunknetzeinheit (200) konfiguriert ist, eine Anwendungsfunktion, AF, zu implementieren oder damit konfiguriert ist und
Durchführen (1102) der Mobilfunknetzoperation gemäß dem Mobilfunknetzparameter und dem TSN-Parameter.

## Revendications

1. Entité de réseau mobile (200) destinée à interagir avec un ou plusieurs domaines de Réseau Sensible au Temps, TSN, (300), l'entité de réseau mobile (200) mettant en œuvre, ou étant configurée avec, une Fonction d'Application, AF, et l'entité de réseau mobile (200) étant configurée en outre pour :
recevoir une demande de gestion (201) en provenance d'une entité de gestion TSN (210), la demande de gestion (201) indiquant une ou plusieurs opérations de gestion TSN et un ou plusieurs paramètres TSN ; et
envoyer une instruction (202) basée sur la demande de gestion (201) à une ou plusieurs autres entités de réseau mobile (220), la ou les autres entités de réseau mobile (220) mettant en œuvre, ou étant configurées avec, une Fonction de Plan Utilisateur, UPF, et/ou un Équipement Utilisateur, UE, (220'), et l'instruction (202) indiquant une ou plusieurs opérations de réseau mobile et un ou plusieurs paramètres de réseau mobile.

2. Entité de réseau mobile (200) selon la revendication 1, dans laquelle l'instruction (202) indique en outre au moins l'un des paramètres TSN.

3. Entité de réseau mobile (200) selon la revendication 1 ou 2, configurée pour déterminer la ou les opérations de réseau mobile et/ou le ou les paramètres de réseau mobile sur la base de la ou des opérations de gestion TSN et/ou du ou des paramètres TSN.

4. Entité de réseau mobile (200) selon l'une des revendications 1 à 3, configurée en outre pour identifier la ou les autres entités de réseau mobile (220) sur la base de la ou des opérations de réseau mobile et/ou du ou des paramètres de réseau mobile.

5. Entité de réseau mobile (200) selon l'une des revendications 1 à 4, dans laquelle l'instruction (202) est configurée pour déclencher la ou les autres entités de réseau mobile (220) afin de réaliser la ou les opérations de réseau mobile selon le ou les paramètres de réseau mobile.

6. Entité de réseau mobile (200) selon l'une des revendications 1 à 5, configurée pour :
tenir à jour une relation de correspondance (400) entre un ensemble de paramètres TSN et un ensemble de paramètres de réseau mobile ; et
déterminer la ou les opérations de réseau mobile et/ou le ou les paramètres de réseau mobile sur la base de la demande de gestion (201) et de la relation de correspondance (400).

7. Entité de réseau mobile (200) selon la revendication 6, dans laquelle l'ensemble de paramètres TSN comprend au moins l'un des éléments suivants :
- une ou plusieurs identifications, ID, de domaine TSN (406) ;
- une ou plusieurs ID de « Grand Master », GM, (407) ;
- une ou plusieurs ID de pont de réseau mobile (408) ;
- une ou plusieurs ID de port (410) d'un ou de plusieurs ponts de réseau mobile (301).

8. Entité de réseau mobile (200) selon la revendication 6 ou 7, dans laquelle l'ensemble de paramètres de réseau mobile comprend au moins l'un des éléments suivants :
- une ou plusieurs ID d'Équipement Utilisateur, UE, (409) ;
- une ou plusieurs ID de Fonction de Plan Utilisateur, UPF, (408) ;
- une ou plusieurs ID de session d'Unités de Données de Protocole, PDU, (411) ;
- un ou plusieurs Identifiants d'Accès au Réseau de Données, DNAI, (411).

9. Entité de réseau mobile (200) selon l'une des revendications 1 à 8, dans laquelle la ou les opérations de gestion TSN comprennent au moins l'une des opérations suivantes :
- le rattachement d'un domaine TSN (300) à un pont de réseau mobile (301) ;
- le détachement d'un domaine TSN (300) d'un pont de réseau mobile (301) ;
- la fusion d'au moins deux domaines TSN (300) ;
- la division d'un ou de plusieurs domaines TSN (300) ;
- la mise à jour de l'ID de domaine (406) et/ou de l'ID de GM (407) d'un ou de plusieurs domaines TSN (300) et/ou ponts de réseau mobile (301) ;
- l'ajout d'un ou de plusieurs ports à un pont de réseau mobile (301).

10. Entité de réseau mobile (200) selon l'une des revendications 1 à 9, configurée pour fournir le ou les paramètres de réseau mobile à la ou aux autres entités de réseau mobile (220) afin de les déclencher pour exécuter la ou les opérations de réseau mobile comprenant au moins l'une des opérations suivantes :
- la modification d'une UPF d'une session PDU ;
- la modification d'une session PDU.

11. Entité de réseau mobile (200) selon l'une des revendications 1 à 10, configurée en outre pour :
recevoir une ou plusieurs confirmations (420) en provenance de la ou des autres entités de réseau mobile (220), chaque confirmation (420) indiquant qu'au moins une opération de réseau mobile selon au moins une opération de gestion TSN a été exécutée ; et
accuser réception (421) de la demande de gestion (201) sur la base de la confirmation (420) reçue.

12. Entité de réseau mobile compatible TSN (220), l'entité de réseau mobile compatible TSN (220) étant configurée pour mettre en œuvre, ou étant configurée avec, une Fonction de Plan Utilisateur, UPF, et/ou un Équipement Utilisateur, UE, (220'), et l'entité de réseau mobile compatible TSN (220) étant configurée en outre pour :
recevoir une instruction (202) en provenance d'une autre entité de réseau mobile (200), l'instruction (202) indiquant une opération de réseau mobile, un paramètre de réseau mobile, et un paramètre TSN, et l'autre entité de réseau mobile (200) étant configurée pour mettre en œuvre, ou étant configurée avec, une Fonction d'Application, AF ; et
réaliser l'opération de réseau mobile selon le paramètre de réseau mobile et le paramètre TSN.

13. Entité de réseau mobile compatible TSN (220) selon la revendication 12, configurée en outre pour fonctionner selon au moins une politique d'un domaine TSN (300).

14. Procédé (1000) pour une entité de réseau mobile (200) destinée à interagir avec un ou plusieurs domaines de Réseau Sensible au Temps, TSN, (300), l'entité de réseau mobile (200) mettant en œuvre, ou étant configurée avec, une Fonction d'Application, AF, et le procédé (1000) comprenant :
la réception (1001) d'une demande de gestion (201) en provenance d'une entité de gestion TSN (210), la demande de gestion (201) indiquant une ou plusieurs opérations de gestion TSN et un ou plusieurs paramètres TSN ; et
l'envoi (1002) d'une instruction (202) basée sur la demande de gestion (201) à une ou plusieurs autres entités de réseau mobile (220), la ou les autres entités de réseau mobile (220) mettant en œuvre, ou étant configurées avec, une Fonction de Plan Utilisateur, UPF, et/ou un Équipement Utilisateur, UE, (220'), et l'instruction (202) indiquant une ou plusieurs opérations de réseau mobile et un ou plusieurs paramètres de réseau mobile.

15. Procédé (1100) pour une entité de réseau mobile compatible TSN (220), l'entité de réseau mobile compatible TSN (220) étant configurée pour mettre en œuvre, ou étant configurée avec, une Fonction de Plan Utilisateur, UPF, et/ou un Équipement Utilisateur, UE, (220'), et le procédé (1100) comprenant :
la réception (1100) d'une instruction (202) en provenance d'une autre entité de réseau mobile (200), l'instruction (202) indiquant une opération de réseau mobile, un paramètre de réseau mobile, et un paramètre TSN, et l'autre entité de réseau mobile (200) étant configurée pour mettre en œuvre, ou étant configurée avec, une Fonction d'Application, AF ; et
la réalisation (1102) de l'opération de réseau mobile selon le paramètre de réseau mobile et le paramètre TSN.
